# EUROPEAN PATENT APPLICATION

(11) **EP 3 416 110 A1**
(43) Date of publication of application: **19.12.2018**
(21) Application number: 17176015.0
(22) Date of filing: 14.06.2017
(51) Int. Cl.: G06Q 10/06

(54) **CONTROLLING EXECUTION OF A PHYSICAL TASK**

(71) Applicant: Siemens Aktiengesellschaft, 80333 München (DE)
(72) Inventor: Cuellar, Jorge, 82065 Baierbrunn (DE); Kasinathan, Prabhakaran, 81549 München (DE)

(57) **Abstract**

Present invention concerns a method for controlling a physical task (120). The method comprises steps of providing a task record (118), the task record (118) describing the physical task (120) to be carried out; and of assigning the physical task (120) from a first entity (110) to a second entity (115) by making a transfer of the task record (118) from the first entity (110) to the second entity (115). In this, the transfer is secured through by means of a blockchain.

## Description

Present invention concerns controlling execution of a physical task. More specifically, present invention concerns assigning a physical task from one entity to another.

### Background of the Invention

When a physical task is to be carried out, it is often desirable to monitor or control task execution. Obligation to execute the task may be passed to a person or organisation. Fulfilment of the task is often bound to certain conditions like a time limit and a predetermined price to be paid upon task completion. One task may be dependent on another task, thus requiring a certain sequence of work. For the coordination of whole meshes of tasks, computer aided schedulers have been proposed. However, these generally address only an organisational aspect and leaves open how a task is assigned from one entity to another one and what happens to make sure that a task is completed.

It is an object of present invention to provide a technique for controlling the execution of a physical task. The invention solves this object through enclosed independent claims. Dependent claims give preferred embodiments.

### Disclosure of the Invention

A method for controlling a physical task comprises steps of providing a task record, the task record describing the physical task to be carried out; and of assigning the physical task from a first entity to a second entity by making a transfer of the task record from the first entity to the second entity. In this, the transfer is secured through by means of a blockchain.

It is proposed to employ a computer system and associated techniques for defining and assigning a physical task from a first entity to a second entity. The entity may be a person, a company or a group of persons and/or companies. The physical task is represented by a task record inside the computer system and the task record is assigned from the first entity (the assigner or orderer) to the second entity (the assignee or contractor). Through the strong coherence between physical task and task record, operations made on the task record may influence the physical task and vice versa. A physical task completion may for instance be determined automatically and be reflected in a transfer of the associated task record back from the assignee to the assigner.

The transfer process is preferred to be secured through use of a concept called blockchain. Through the blockchain it can be ensured that once the transfer is completed and a corresponding block of information has been appended to the blockchain, neither the transfer itself or its terms and conditions nor any preceding transfer (if there is any) can be changed. The task record reflects ownership or assignment of the physical task at hand in a concise and tamper-proof way. Blockchains can be set up sufficiently secure to support digital payments with crypto currencies like bitcoin. The blockchain may make sure that a task record is unique and cannot be validly reissued, a problem that is known as double spending in the context of crypto currencies. A task record that has been transferred away from the first entity cannot be transferred by the first entity again before being transferred back.

The invention extends the idea of a smart contract, which proposes an automatic contract execution, or coloured coins, which permits to bind real world assets such as stocks, bonds or a deed for a house, to an address in a bitcoin network.

The blockchain may comprise, for each transfer that was ever carried out on the task record, a block of information that gives reference to the entities participating in the transfer as well as a reference to a preceding transaction. The blockchain may be stored redundantly on many computer systems and each computer system may have one copy of the blockchain. There may be no master blockchain and all copies of the blockchain may be equally relevant. Each block in the blockchain is preferred to comprise a hash value that has been calculated over the task record in the transfer.

The transfer may require cryptographic operations by both the first and the second entity. This may help making sure that there is an agreement between both entities over the transfer. The cryptographic operations may especially be used to sign or validate the hash value. The processed hash value may thus document the consensus reached between the parties. Any external entity may verify if a task record is in the status the associated blockchain documents and if the blockchain is intact. It may be possible to roll back transactions to a predetermined point in time so that a malfunctioning task record management system may be put in a safe state.

Each entity may be associated a pair of cryptographic keys, one of which being private and the other one being public, and said cryptographic operations both require use of the private key. The pairs of keys may correspond to an asymmetric cryptography algorithm. A cryptographic operation with one of the keys, especially an encryption operation, may only be reversible through the other key. Each key may be usable for both encrypting a plain text or decryption of a text that was encrypted using the other key. Public keys may be accessible via a public key server.

The task record may comprise an externally determinable condition. If the condition is met the task record may be marked as completed. This may happen automatically so that an objectively determinable condition may trigger a transfer of the task record. For instance, the physical task may comprise moving a predetermined mass of a good from one place to another. As soon as a localisation system for the good registers that the predetermined amount has been delivered to the destination it may prepare or trigger an automatic transfer of the now completed task-record back to the first entity. Through this, task record management may be simplified and made more efficient.

The task record may comprise information in one or several categories. Possible categories include an assigner; an assignee; an obligation that must be fulfilled for carrying out the task; a pre-condition that must be fulfilled before the task can be carried out; a post-condition that must be fulfilled after the task is finished; an exception stating what happens if a given condition cannot be met; a next delegate denoting a third entity to whom the task will be transferred after a predetermined portion has been carried out by the second entity; a completion status of the task; permissions for the second entity to read / change / delegate the task record or a part thereof.

Some of these categories may have a larger impact on the handling of task records. For instance the permissions information may support a permissions management system that enables the assignment of access rights to entities or groups of entities. This way, management over a physical task may be delegated to another entity. Transparency may be controlled on a fine grain level.

In one more embodiment the second entity provides a further task record on the basis of said first task record, the further task record describing a further physical task that comprises a portion of said physical task. In other words the second entity may split up an assigned physical task into physical sub-tasks and create dedicated sub-task records that can then be transferred to other parties. Upon completion of the sub-tasks the original task may be completed. Upon completion of a task by the second entity the task record may be handed back to the first entity or passed on to a third entity (cf. category 'next delegate' above). Thus a sequence of tasks may be controlled in an improved form.

Transfer of a task record may be considered a signalling event so that asynchronous task execution may be supported. As completion of a task may trigger transfer of this or another task to another entity, fast execution of an overall task may be enabled. Normally transfer of a task record will require consent of the assignee so that a transfer attempt may comprise a notification to the assignee on the proposed transfer.

The task record may be published and a portion of the published record may be encrypted. Publishing may ensure transparency, possibly within the limits given trough the permissions system, and encryption may be used to enforce selective opacity where appropriate.

An apparatus for controlling a physical task comprises a storage means for a task record, the task record describing the physical task to be carried out; and a processing unit that is adapted to conduct a transfer of the task record from a first entity to a second entity, wherein the transfer is secured by means of a blockchain. The apparatus may comprise a programmable computer and it may be adapted to carry out a portion or the complete method given above. The method may be present in shape of a computer program product with program code means for controlling the apparatus. Features or advantages of the method may be applicable to the apparatus and vice versa.

### Brief description of the drawings

The above-described properties, features and advantages of present invention as well as the way they are achieved will be made clearer and better understandable in the light of the following discussion, making reference to exemplary embodiments shown in accompanying figures, in which
- Fig. 1: shows an exemplary workflow for manufacturing a product;
- Fig. 2: shows an embodiment of a token representing a physical task; and
- Fig. 3: shows a block diagram of a method for controlling a physical task.

Detailed description of preferred embodiments

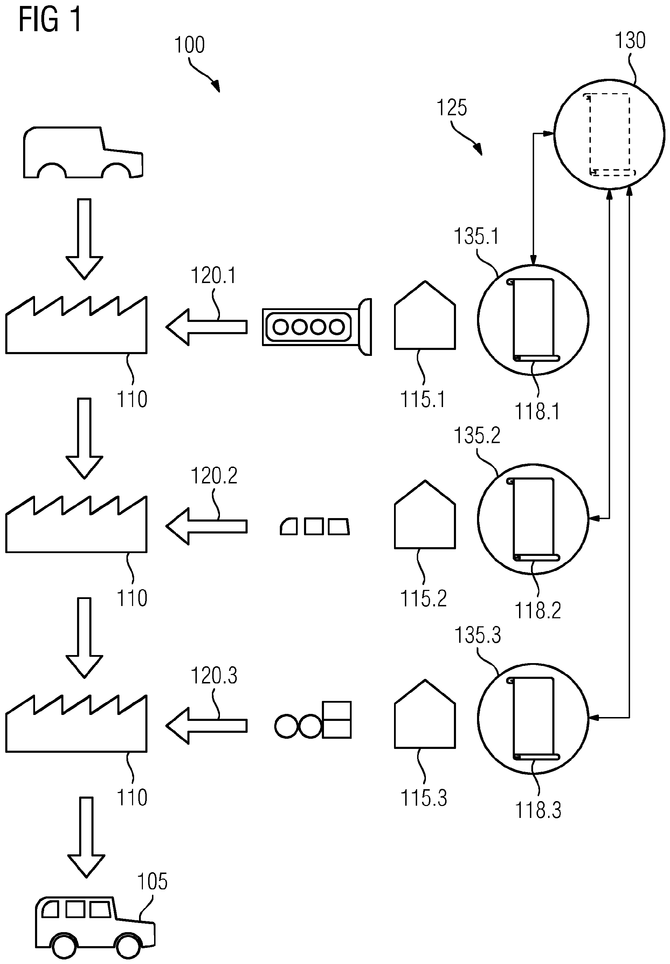

Figure 1 shows a workflow 100 for manufacturing a product 105. The exemplary product 105 shown in figure 1 is a car, however, the method and apparatus proposed herein is not limited to the given example. The product 105 is manufactured by a manufacturer 110 through carrying out certain predetermined working steps like installing an engine, windows and tires to a vehicle body.

The manufacturer 110 may decide to delegate provisioning of elements that are necessary for his working steps, or a predetermined working step like painting the vehicle body, to a contractor 115. The subject of such a delegation is called a physical task 120. In present example there may be three different contractors 115.1, 115.2 and 115.3, who are tasked to provide an engine, windows and tires, respectively.

The physical task 120 may comprise certain conditions and is generally binding to both parties 110, 115. Example conditions may, in the case of the engine, comprise a number of engines, a predetermined quality, make or model, a delivery time and a predetermined price. When the manufacturer 110 and the contractor 115.1 agree on the conditions they may write them down in a contract that is binding for both sides. However, such a contract may require a lot of manual work to see whether or not it is fulfilled and what consequences that brings. Also, the contract usually does not define what happens after a task has been completed by the contractor 115. For instance, another task like installing the engine into the vehicle body or test driving the vehicle with the engine are tasks that may be triggered or be otherwise dependent on the completion of the delivery task of the engines.

It is proposed to bind a task record or token 118 to a physical task 120 to be able to monitor and/or control task 120 execution via the token 118. The token 118 is preferred to be automatically processable so that a relationship between tasks can be controlled. Many such relationships may make up a workflow and the workflow may comprise operations like creating, selecting, sequencing, splitting, joining, passing on and completing tasks. This may help taming the complexity of modern industrial production environments and speed up production processes.

The token 118 is preferred to comprise cryptographic information that may be representable as a numeric or alphanumeric string inside a computer system or be stored on a data storage device. By using a technique that is known from crypto currencies, the token 118 can be passed from manufacturer 110 to contractor 115 and back. A transfer of the token 118 from manufacturer 110 to contractor 115 represents an assignment of the contractor 115 to perform a predetermined physical task 120. When the physical task 120 is completed, the token 118 may be passed back to the manufacturer 110. Possible ways of manipulating and passing on a token 118 will be explained in more detail below.

The token 118 is preferred to be kept inside a computer or a computer system 125. The computer system 125 may provide a first digital wallet 130 to the manufacturer 110 and a second digital wallet 135 to the contractor 115, wherein a wallet 135, 140 comprises storage space for a token 118 and manipulation of the wallet 135, 140 is limited to predetermined operations that may be cryptographically secured so that only a predetermined party 110, 115 may carry them out.

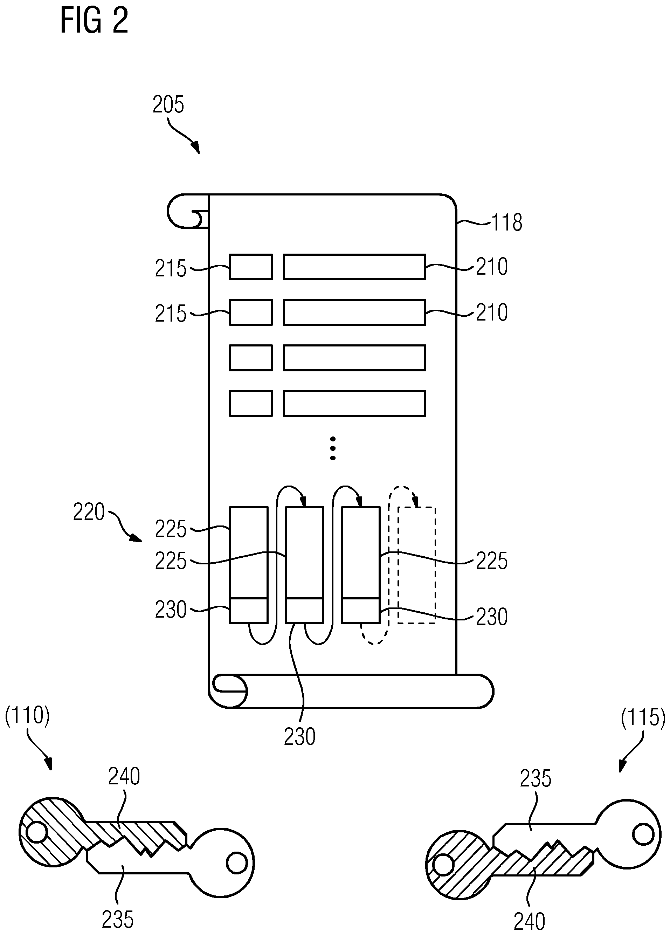

Figure 2 shows a schematic representation of a token 118. The token 118 may be kept in a ledger 205 that is preferred to be configured to keep a larger number of tokens 118. In present embodiment the token 118 comprises one or more information fields 210 of predetermined classes 215. In a different embodiment the token 118 may comprise a reference to information that is stored in a predetermined place outside the token 118. The token 118 represents a physical task 120 and the entity 110, 115 the token 118 is assigned to (possibly via the wallet 130, 135) is responsible for executing the physical task 120. The fields 210 may give information on aspects or conditions of the physical task 120 and/or meta information on the token. Example categories 215 include:
- an assigner, which is the party or entity 110, 115 that passes on a physical task 120;
- an assignee, which is the party or entity 110, 115 that accepts a physical task 120;
- an obligation that must be fulfilled for carrying out the physical task 120, which may be the delivery of a predetermined good, completion of a process or provisioning of a predetermined condition;
- a pre-condition that must be fulfilled before the physical task 120 can be carried out;
- a post-condition that must be fulfilled after the physical task 120 is finished;
- an exception stating what happens if a given condition (especially a pre-condition or a post-condition)cannot be met;
- a next delegate denoting a third entity to whom the physical task 120 may be transferred after a predetermined portion of the task 120 has been completed by the assignee 110, 115;
- a completion status of the physical task 120; or
- permissions to read / change / delegate the token 118 or a part thereof.

The information inside the fields 215 is preferred to be honoured or enforced through an environmental system. For instance, should a field 210 of type 215 permissions be present which indicates that a certain portion of the token 118 may not be read by a specific entity 110, 115, then the any party 110, 115 wishing to read said information may be required to first authenticate to an access application running on the computer system 125. The application may then show or conceal the information in question based on the identity of the entity 110, 115 and the permission information inside the token 118.

Other information given in fields 210 may be evaluated automatically. In one case an external condition like a measured value, a published price or a physical condition of a contraption may change the value a condition evaluates to. This may be used to trigger action on the token 118. Particularly it may cause transfer of the token to another party 110, 115 or trigger a notification for such a transfer, such as to request the affected parties 110, 115 to consent on a proposed change to the token 118.

In another case information in one of the fields 210 may automatically influence a physical process, especially one that is related to execution of the physical task 120 associated with the token 118. Should for instance the token 118 concern the task of provisioning a predetermined good and the required amount changes, a physical provisioning system may be automatically slowed down or shut off. A situation where the deliverable good that is subject of the physical task 120 is changed may for instance arise if several physical tasks 120 are inter-related as is generally the case in a realistic production environment.

A physical task 120 may be directed at the delivery of an amount of, say, 1000 items of a predetermined kind to the manufacturer 110. The manufacturer 110 may issue physical tasks 120 for delivery 500 items each to different contractors 115.1, 115.2. To make sure that he will surely get the 1000 items he requires he can increase the number of items to 700 each, thereby creating a race condition between the contractors 115. Should one of them deliver the required 700 items, the required number of items for the other contractor may be decreased. Many other types of links and relationships between physical tasks 120 tokens 118 or parties 110, 115 can be modelled by an appropriate token 118 handling system.

Making a change to a predetermined kind of information of the token 118 - usually to any kind of information - requires the consensus of the parties 110, 115 affected. A transfer of the token 118 from one party 110, 115 to another, which may be equivalent to passing responsibility for a physical task 110, 115 between those two parties, may be carried out by changing one or more fields 210 inside the token 118.

It is proposed that a blockchain 220 is employed to protect information inside the token 118 or associated with the token 118 to be changed. The concept of a blockchain 220 may be known to the subject matter expert from the context of bitcoins. The blockchain 220 comprises blocks 225 linked in a fixed sequence, usually chronologically. Each block 225 comprises a cryptographic hash 230 that is calculated over all the information of a token 118 that needs protection plus characteristic information of a previous block 225 i.e. the previous hash 230.

The hash 230 must be signed and verified by both parties 110, 115 to validate it. For this, each party 110, 115 may be assigned a pair of cryptographic keys, wherein one key 235 is private and one key 240 is public. Corresponding keys 235, 240 may be used to conduct mutually reverse operations. For instance, a clear text that is encrypted with one of the keys 235, 240 may be decrypted to clear text with the other key 235, 240. Public keys 240 may be kept in a public key repository so they can be retrieved by any interested party 110, 115.

By linking a new block 225 a previously created block 225, the history of the token 118 is extended by one operation. The operation may especially comprise a transfer of the token 118 from one party 110, 115 to another. This may be equivalent or related to moving a token 118 from one wallet 130, 135 to another. It is to be noted that a collection of tokens 118 or of historic blockchain 220 information may be kept decentralised such as to prevent data corruption or modification.

Validity of a token 118 may be verified by calculating a hash over the information in question and comparing the produced hash with the hash at the end of the blockchain 220. An older part of the blockchain or even the complete blockchain may be stored outside the token 118. In this case, the token 118 is preferred to comprise a reference to the external blockchain 220.

Through the blockchain 220 it can be made sure that
a.) a token 118 is assigned to one and only one party 110, 115 at any given time,
b.) the parties affected by a token 118 must consent to an operation on the token 118 or its associated information.

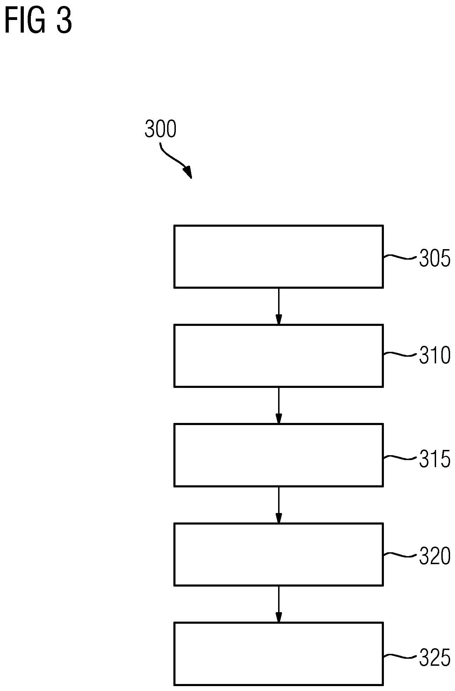

Figure 3 shows a block diagram of a first method 300 for controlling and/or monitoring a physical task 120. The method 300 is preferred to be adapted to run on a computer system 125 and more specifically in the context of a system 100 like that of figure 1.

In a first step 105, a physical task 120 is determined that needs carrying out. In the example of figure 1 this step may be carried out by manufacturer 110. In a following step 310 a token 118 is provided that reflects all necessary information on the physical task 120 and/or meta data on the token 118.

The token 118 shall then be assigned to a predetermined party, which is contractor 115 in our example. This usually requires the consent of the contractor 115, so the contractor 115 is preferred to be notified in a step 315 of the proposed assignment of the token 118 - and therefore the physical task 120 - to him. Should the contractor 115 refuses to give his consent, the method 300 cannot proceed. Otherwise, after the contractor 115 gives his consent in a step 320, the blockchain 220 may be updated accordingly in a step 325. As soon as this is done, the transfer of the token 118 is complete and responsibility for the physical task 120 in question lies at the contractor 115.

Once the contractor 115 has completed the physical task 120, the token 118 may be transferred back to the manufacturer 110, using a similar process. The contractor 115 may also sub-delegate part of the physical task 120 to another entity or create a new token 118 denoting another physical task that helps the contractor 115 to fulfil his obligations. For a sub-delegation the contractor 115 may need approval from the manufacturer 110. Such an approval may be done manually or automatically. For instance, there may exist a whitelist describing who the contractor 115 may subcontract to, or a blacklist describing who he is not supposed to subcontract to. Other rules may also apply, such as subcontracting only up to a predetermined portion of the original task 120 or up to a predetermined financial equivalent.

Through the use of the proposed technique it is possible to implement a project management system 100 that may support operations on tasks that are tedious and error-prone to be carried out or checked manually as is required in traditional systems. The system 100 may also permit to reflect a workflow with predetermined tasks 120, so that automatic or semiautomatic processing of steps of the workflow may be supported. In this, the system 100 may use and go beyond the concept of smart contracts. The invention proposed here may for instance be used in context of facility management, forwarding of goods, cattle or persons, construction, production or provisioning.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

## Claims

1. Method (300) for controlling a physical task (120), the method (300) comprising the following steps:
- providing (310) a task record (118), the task record (118) describing the physical task (120) to be carried out;
- assigning (315, 320) the physical task (120) from a first entity (110) to a second entity (115) by making a transfer of the task record (118) from the first entity (110) to the second entity (115);
- wherein the transfer is secured by means of a blockchain (220).

2. Method (300) according to claim 1, wherein the blockchain (220) comprises, for each transfer that was ever carried out on the task record (118), a block (220) of information that gives reference to the entities participating in the transfer as well as a reference to a preceding transaction.

3. Method (300) according to claim 1 or 2, wherein a transfer requires cryptographic operations by both the first (110) and the second entity (115).

4. Method (300) according to claim 3, wherein each entity (110, 115) is associated a pair of cryptographic keys, one of which being private and the other one being public, and said cryptographic operations both require use of the private key.

5. Method (300) according to one of the preceding claims, wherein the task record (118) comprises an externally determinable condition and the task record (118) is marked as completed if the condition is met.

6. Method (300) according to one of the preceding claims, wherein the task record (118) comprises information on at least one of the following categories:
- an assigner (110);
- an assignee (115);
- an obligation that must be fulfilled for carrying out the task (120);
- a pre-condition that must be fulfilled before the task (120) can be carried out;
- a post-condition that must be fulfilled after the task (120) is finished;
- an exception stating what happens if a given condition cannot be met;
- a next delegate (110, 115) denoting a third entity to whom the task (120) will be transferred after a predetermined portion has been carried out by the second entity (115);
- a completion status of the task (120);
- permissions for the second entity to read / change / delegate the task record (118) or a part thereof.

7. Method (300) according to one of the preceding claims, further comprising steps of:
- providing, by the second entity (115), a further task record (118) on the basis of said task record (118),
- the further task record (118) describing a further physical task (120) that comprises a portion of said physical task (120).

8. Method (300) according to one of the preceding claims, wherein the task record (118) is published.

9. Method (300) according to claim 8, wherein the published record comprises an encrypted portion.

10. Apparatus (125) for controlling a physical task (120), the apparatus comprising:
- storage means (125) for a task record (118), the task record (118) describing the physical task (120) to be carried out; and
- a processing unit (125) that is adapted to conduct a transfer of the task record (118) from a first entity (110) to a second entity (115),
- wherein the transfer is secured by means of a blockchain (220).
